(19) **Europäisches Patentamt / European Patent Office / Office européen des brevets**

(11) **EP 3 201 030 B1**

(12) **FASCICULE DE BREVET EUROPEEN**

(45) Date de publication et mention de la délivrance du brevet:
**25.03.2020  Bulletin 2020/13**

(21) Numéro de dépôt: **15788133.5**

(22) Date de dépôt: **02.10.2015**

(51) Int Cl.:
**B60K 17/10** *(2006.01)*        **B60K 17/356** *(2006.01)*
**B60W 10/06** *(2006.01)*        **B60W 30/19** *(2012.01)*
**F16H 61/431** *(2010.01)*       **F16H 61/47** *(2010.01)*
**F16H 61/472** *(2010.01)*       **B60W 10/02** *(2006.01)*
**B60W 10/103** *(2012.01)*       **B60W 10/11** *(2012.01)*
**B60W 10/30** *(2006.01)*        **B60W 20/10** *(2016.01)*

(86) Numéro de dépôt international:
**PCT/FR2015/052645**

(87) Numéro de publication internationale:
**WO 2016/051106 (07.04.2016 Gazette 2016/14)**

(54) **PROCEDE DE COMMANDE D'UN DISPOSITIF DE TRANSMISSION D'UN VEHICULE**

VERFAHREN ZUR STEUERUNG EINES FAHRZEUGGETRIEBES

METHOD FOR CONTROLLING A VEHICLE TRANSMISSION DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **03.10.2014  FR 1459499**

(43) Date de publication de la demande:
**09.08.2017  Bulletin 2017/32**

(73) Titulaire: **Poclain Hydraulics Industrie**
**60410 Verberie (FR)**

(72) Inventeurs:
• **GOUZOU, Christophe**
  **F-60410 Verberie (FR)**
• **DEPIERRE, Gery**
  **F-60410 Verberie (FR)**
• **HOUILLON, Pierre-Louis**
  **F-60410 Verberie (FR)**

(74) Mandataire: **Cabinet Beau de Loménie**
**158, rue de l'Université**
**75340 Paris Cedex 07 (FR)**

(56) Documents cités:
**EP-A1- 0 993 982        WO-A1-2013/041115**
**WO-A1-2013/160144**

# Description

La présente invention concerne un procédé de commande d'un dispositif de transmission d'un véhicule, le dispositif comprenant un moteur d'entraînement, une transmission mécanique reliée au moteur d'entraînement via un embrayage et une transmission hydraulique ayant une pompe et n moteurs hydrauliques, n étant supérieur ou égal à 1, la pompe étant apte à être entraînée par le moteur d'entraînement pour alimenter les moteurs hydrauliques en fluide.

On connaît, par exemple par le brevet européen EP 0 993 982, l'utilisation combinée d'une transmission hydraulique et d'une transmission mécanique. La transmission hydraulique est utilisée dans des conditions particulières, en particulier pour réaliser une assistance de la transmission mécanique. Classiquement, lors de la conduite d'un véhicule entraîné par la transmission mécanique, le moteur d'entraînement est débrayé pour le passage des vitesses, vers un rapport supérieur ou vers un rapport inférieur, puis embrayé après ce passage.

Lorsque le changement de vitesse intervient alors que l'assistance hydraulique est active, il peut affecter cette assistance hydraulique. En effet, lors du changement de vitesse, le moteur d'entraînement voit sa vitesse se réduire, sensiblement jusqu'à la vitesse de ralenti, ce qui affecte la vitesse d'entraînement de la pompe. Il en résulte des risques d'à-coups dans la conduite du véhicule. En effet, une baisse de régime du moteur d'entraînement se traduit par une diminution de la vitesse d'entraînement de la pompe qui, elle-même, se traduit par une diminution du débit d'alimentation du ou des moteur(s) hydraulique(s), cette diminution se traduisant elle-même par une baisse de la vitesse de sortie de ces moteurs, et/ou par une baisse du couple de sortie qu'ils délivrent.

Pour tenter de remédier à ce type de situation, on peut agir sur la cylindrée de la pompe. Par exemple, lorsque la vitesse d'entraînement de la pompe diminue, on peut chercher à augmenter la cylindrée de la pompe pour obtenir un débit constant. La demande PCT WO 2013/041115 propose une solution de ce type, en suggérant d'agir sur les paramètres de fonctionnement de la pompe pour générer un couple visant à palier les variations de vitesse de sortie et/ou de couple de sortie précitées.

Cependant, cette solution n'est pas entièrement satisfaisante car, en cas de chute importante de la vitesse du moteur d'entraînement, la cylindrée disponible de la pompe peut s'avérer insuffisante pour compenser la perte de débit totale, c'est-à-dire que, même en portant la cylindrée de la pompe à son maximum, le débit généré peut rester insuffisant en raison de la faiblesse de la vitesse du moteur d'entraînement. Dans ce cas, on risque même de créer un couple contre-productif, le débit de fluide délivré par la pompe pouvant devenir inférieur au débit nécessaire pour alimenter le ou les moteur(s) hydraulique(s) en leur permettant d'assurer la vitesse d'entraînement désirée.

La présente invention vise à améliorer l'état de la technique en remédiant aux inconvénients précités.

Ce but est atteint grâce au fait qu'on détecte une situation de débrayage du moteur d'entraînement, on calcule une vitesse de sortie du moteur d'entraînement à l'état débrayé, et on détermine la cylindrée de la pompe pour que, en étant entraînée par le moteur d'entraînement ayant la vitesse de sortie déterminée, la pompe délivre aux n moteurs hydrauliques un débit de fluide tel qu'au moins l'un des paramètres de fonctionnement des moteurs hydrauliques parmi la vitesse de sortie et le couple de sortie desdits moteurs soit un paramètre cible.

Grâce à ce procédé, on maîtrise la vitesse de sortie du moteur d'entraînement à l'état débrayé, en la fixant à la vitesse déterminée qui, comme on le verra dans la suite, peut être constante ou non pendant la situation de débrayage. La cylindrée de la pompe est ajustée pour tenir compte de cette vitesse déterminée, de manière à délivrer aux n moteurs hydrauliques le débit de fluide suffisant pour assurer la vitesse de sortie et/ou le couple de sortie souhaité, permettant un entraînement du véhicule dans les conditions optimales. La détermination de la cylindrée de la pompe est en particulier réalisée par un calcul.

Optionnellement, la vitesse de sortie déterminée du moteur d'entraînement est la vitesse de sortie de ce moteur au début de la situation de débrayage.

Dans ce cas, ayant détecté la situation de débrayage, on se contente de maintenir la vitesse de sortie du moteur d'entraînement à la vitesse initiale. Dans ce cas, si l'assistance hydraulique était active avant le débrayage, il peut suffire de maintenir la cylindrée de la pompe à la cylindrée qu'elle avait au déclenchement du débrayage, pour obtenir la vitesse de sortie souhaitée. En revanche, on peut faire varier la cylindrée de la pompe si l'on fixe comme paramètre cible le couple de sortie des n moteurs hydrauliques.

Optionnellement, le débrayage du moteur d'entraînement visant à faire passer ce moteur d'un premier rapport à un deuxième rapport, on commande le dispositif selon un mode d'assistance au passage de vitesse selon lequel on détecte ledit deuxième rapport et on détermine une première valeur de vitesse de sortie du moteur d'entraînement qui est la vitesse de sortie de ce moteur au moment où, ce moteur étant dans le premier rapport, la situation de débrayage commence et une deuxième valeur de vitesse de sortie du moteur d'entraînement qui est la vitesse de sortie nécessaire au maintien de la vitesse du véhicule entraîné par la transmission mécanique au moment où, le deuxième rapport étant enclenché, la situation de débrayage cesse, et on calcule la vitesse de sortie du moteur d'entraînement de telle sorte qu'elle passe de la première valeur, au début de la situation de débrayage, à la deuxième valeur, à la fin de la situation de débrayage.

Dans ce cas, on fait varier la vitesse de sortie du moteur d'entraînement pendant la situation du débrayage en tenant compte des vitesses au début et à la fin de cette situation. Bien entendu, on détermine en parallèle la cylindrée de la pompe comme indiqué précédemment.

Par exemple, pour calculer la vitesse de sortie du moteur d'entrainement à l'état débrayé, on part des première et deuxième valeurs précitées et on détermine cette vitesse de sortie pour qu'elle connaisse l'évolution souhaitée entre ces deux valeurs pendant la phase de débrayage. Par exemple, on calcule cette évolution par rapport au temps en calculant l'écart entre les première et deuxième valeurs et en divisant cet écart par une durée prédéterminée, considérée comme une durée normale pour le passage du premier au deuxième rapport. Cela donne alors une pente constante à l'évolution. On peut préférer lui donner une pente variable, par exemple une pente faible au début et à la fin du changement de rapport de vitesse, mais une pente plus importante dans la phase intermédiaire du changement de rapport. De manière générale, l'évolution de la vitesse de sortie du moteur d'entrainement pendant la phase de débrayage peut être calculée pour suivre une courbe d'évolution prédéterminée souhaitée.

Par exemple, selon le mode d'assistance au passage de vitesse, on détecte le deuxième rapport pendant la situation de débrayage et on maintient la vitesse de sortie du moteur d'entraînement à la première valeur entre le début de la situation de débrayage et le moment de la détection du deuxième rapport, puis on fait varier ladite vitesse de sortie afin qu'elle atteigne la deuxième valeur au moment où la situation de débrayage cesse.

Optionnellement, on calcule la vitesse de sortie du moteur d'entraînement en calculant une vitesse de sortie Ne dudit moteur selon la formule

$$Ne = (Ch/(f.Ccp)).Nr.n/r,$$

où

Ch est la cylindrée active de chaque moteur hydraulique

Ccp est la cylindrée courante de la pompe au moment où la situation d'embrayage est détectée,

f est un coefficient compris entre 0,5 et 1,5, de préférence entre 0,7 et 1,3, encore plus de préférence entre 0,8 et 1,2,

Nr est la vitesse de sortie cible des moteurs hydrauliques,

r est le ratio d'entraînement de la pompe par le moteur d'entraînement.

Le coefficient f peut être inférieur à 1, typiquement entre 0,8 et 1, pour augmenter légèrement la vitesse de sortie du moteur d'entraînement au passage de la vitesse. Cela peut s'avérer favorable au rétrogradage, puisque par l'augmentation de la vitesse du moteur d'entrainement, la cylindrée courante de pompe va être réduite, et se rapprocher de la cylindrée nécessaire au rapport inférieur.

A l'inverse, le coefficient f peut être supérieur à 1, typiquement entre 1 et 1,2, pour diminuer légèrement la vitesse de sortie du moteur d'entraînement au passage de la vitesse. Cela peut s'avérer favorable au passage du rapport de vitesse supérieur puisque, par la diminution de la vitesse du moteur d'entraînement, la cylindrée de la pompe va être augmentée, et se rapprocher de la cylindrée nécessaire au rapport supérieur. Dans ce cas, il est souhaitable que le coefficient f reste proche de 1 pour ne pas risquer de requérir une cylindrée de pompe supérieure à sa cylindrée maximale Cmp. Cette valeur maximale du coefficient f peut être calculée sur la base des paramètres de la chaîne cinématique du véhicule et de la cylindrée nominale de la pompe choisie.

L'organe d'entrée de la pompe peut être directement raccordé à l'organe de sortie du moteur d'entraînement, sans étage de réduction ou de multiplication, auquel cas le ratio r précité sera égal à 1. Cependant, il peut également y avoir des organes intermédiaires faisant en sorte que la pompe soit entraînée à une vitesse qui soit le produit de la vitesse de sortie du moteur d'entraînement par un coefficient qui est inférieur à 1 avec un étage de réduction, ou supérieur à 1 avec un étage de multiplication. Ce coefficient est le ratio d'entraînement de la pompe par le moteur d'entraînement. Il est par ailleurs intéressant que le coefficient f soit inférieur à 1, sans être trop faible, pour tenir compte des possibilités de glissement des roues du véhicule dans un sens positif ou négatif. En effet, par exemple dans le cas d'un changement de vitesse pour passer au rapport supérieur, il est souhaitable que l'entraînement assuré, à l'état débrayé, par les n moteurs hydrauliques puisse le cas échéant permettre une vitesse des roues légèrement supérieure à la vitesse juste nécessaire théoriquement au maintien de la vitesse de déplacement du véhicule, pour permettre d'accompagner le processus global d'accélération du véhicule que traduit la nécessité de changer les vitesses pour passer au rapport supérieur. De même, lors d'un passage à un rapport inférieur, on peut souhaiter entraîner les roues, par les moteurs hydrauliques, à une vitesse légèrement inférieure à la vitesse théorique, pour accompagner le processus de décélération possible du véhicule. Le fait de choisir un coefficient f inférieur à 1 donne ainsi de la réserve, puisque la cylindrée de la pompe prise en compte pour le calcul de la vitesse de sortie Ne est en fait une fraction de la cylindrée maximale. Par conséquent, s'il est nécessaire d'obtenir une vitesse de sortie légèrement supérieure, on pourra augmenter légèrement la cylindrée de la pompe tout en restant dans les limites de la cylindrée maximale.

Selon une variante, le coefficient f étant strictement inférieur à 1, on maintient la vitesse de sortie du moteur d'entraînement à la vitesse de sortie Ne calculée, on détecte la pression de fluide à l'alimentation et à l'échappement des moteurs hydrauliques et on maintient la cylindrée de la pompe à une valeur telle que le couple de sortie des moteurs hydrauliques reste sensiblement le même pendant la situation de débrayage qu'au moment où le débrayage commence.

Il s'agit ici de réaliser un contrôle par le couple, en jouant sur la cylindrée disponible de la pompe ainsi qu'il a été indiqué.

Selon une variante, le coefficient f étant strictement inférieur à 1, on maintient la vitesse de sortie du moteur d'entraînement à la vitesse de sortie Ne calculée, on détecte la pression de fluide à l'alimentation et à l'échappement des moteurs hydrauliques et on fait varier la cylindrée de la pompe pour que le couple de sortie des moteurs hydrauliques reste, pendant la situation de débrayage, sensiblement égal à une valeur non nulle prédéterminée.

Par exemple, selon cette variante, on commande le dispositif de transmission selon un mode d'assistance hydraulique selon lequel on régule la cylindrée de la pompe de telle sorte que la pression d'alimentation d'au moins l'un des n moteurs hydrauliques est supérieure d'une valeur prédéterminée à la pression d'échappement dudit au moins un moteur.

Selon un autre exemple dans la même variante, on commande le dispositif de transmission selon un mode de retenue hydraulique selon lequel on régule la cylindrée de la pompe de telle sorte que la pression d'alimentation d'au moins l'un des n moteurs hydrauliques est inférieure d'une valeur prédéterminée à la pression d'échappement dudit au moins un moteur.

L'invention sera bien comprise et ses avantages apparaîtront mieux à la lecture de la description détaillée qui suit, d'un mode de réalisation illustré à titre d'exemple non limitatif. La description se réfère aux dessins annexés sur lesquels :

- la figure 1 est une vue schématique d'un dispositif de transmission d'un véhicule permettant la mise en œuvre du procédé selon l'invention ;
- la figure 2 est un ensemble de courbes présentant les variations de différents paramètres, lors de la mise en œuvre du procédé d'assistance au passage des vitesses selon l'invention ; et
- la figure 3 est également un ensemble de courbes présentant les variations de différents paramètres, lors de la mise en œuvre d'une commande de la transmission hydraulique en mode « sans couple ».

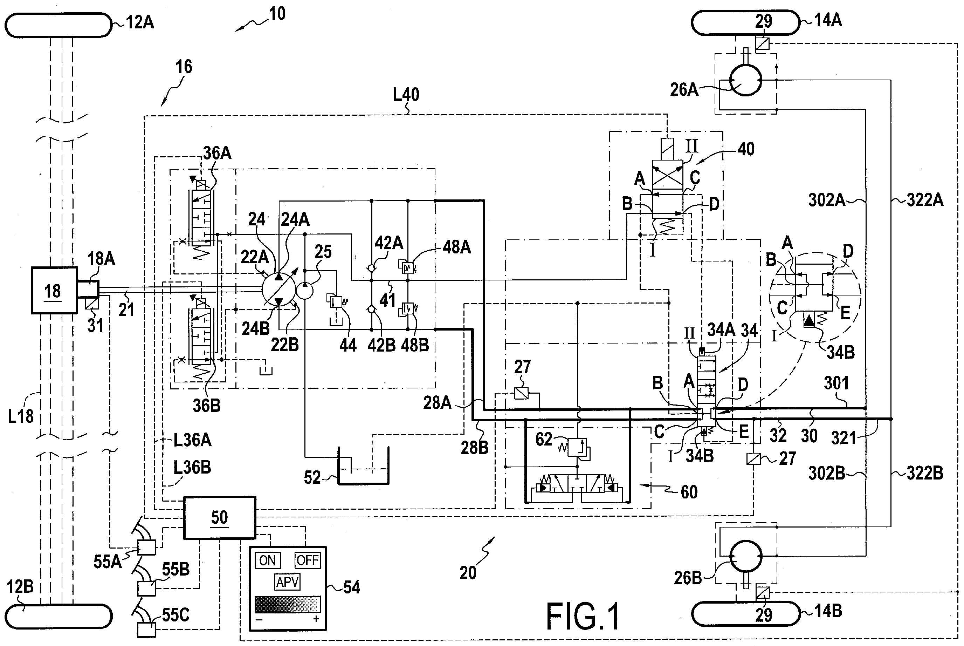

La figure 1 représente un dispositif de transmission d'un véhicule 10 ayant deux roues arrière 12A, 12B, et deux roues avant 14A, 14B. L'entraînement du véhicule est assuré en régime normal par une transmission mécanique 16, qui est la transmission principale. Cette transmission mécanique relie un moteur d'entraînement 18 aux roues 12A et 12B (par exemple les roues arrière), et assure ainsi seule l'entraînement du véhicule la plupart du temps.

Le moteur 18 est relié à la transmission mécanique 16 par un embrayage 18A. Il peut être un moteur à combustion interne (à essence, GPL, ou autres...), ou bien un autre type de moteur, tel qu'un moteur électrique ou autre.

Outre la transmission mécanique, le dispositif de transmission comprend une transmission hydraulique 20 qui est activée à titre d'assistance, pour assurer la propulsion du véhicule dans des conditions de route difficiles (route en pente ou déclive, route glissante, etc.). Cette transmission hydraulique permet en effet de rendre motrices les deux roues 14A et 14B, qui ne sont pas entraînées par la transmission mécanique. Ainsi grâce à la transmission hydraulique 20, le véhicule dispose de modes de fonctionnement dans lesquels les quatre roues 12A, 12B, 14A et 14B sont motrices.

Bien que dans ce mode de réalisation, l'assistance hydraulique soit appliquée aux roues avant 14A et 14B, elle pourrait tout aussi bien être appliquée à des roues arrière.

La transmission hydraulique 20 est couplée à un arbre 21 qui est lié à la sortie de puissance du moteur 18, duquel elle tire l'énergie qu'elle transmet aux roues 14A, 14B lorsqu'elle est activée.

Plus précisément, la transmission hydraulique comprend une pompe 24 qui est reliée à l'arbre de sortie 21 du moteur d'entraînement 18 de manière à être entraînée par ce dernier. Cette pompe 24, également dénommée ci-après « pompe principale », sert à l'alimentation des moteurs hydrauliques 26A et 26B qui sont respectivement attelés aux roues 14A et 14B.

La pompe principale 24 est de type à cylindrée variable, en particulier une pompe réversible à débit variable, du type à plateau-came oscillant, dont l'orientation fait varier la cylindrée de la pompe.

Dans l'exemple représenté, la transmission hydraulique comprend également une pompe auxiliaire 25 ou pompe de gavage qui, de manière connue en soi, sert à maintenir une pression minimale de gavage dans les composants du circuit de manière à éviter les phénomènes de cavitation. La pompe 25 a une cylindrée fixe, sa pression de refoulement étant limitée par le limiteur de pression 44 de manière à maintenir la pression de gavage $P_G$, par exemple de l'ordre de 30 bar, dans une conduite de gavage 41.

Les pompes principale 24 et auxiliaire 25 sont reliées toutes les deux à l'arbre de sortie 21 du moteur 18, et sont donc actionnées conjointement par celui-ci. Optionnellement, les pompes principale et auxiliaire peuvent également être entraînées par deux arbres séparés, ou le gavage auxiliaire peut être assuré par un groupe électropompe.

Le circuit de transmission hydraulique comprend deux conduites de pompe 28A, 28B, reliées aux orifices principaux 24A, 24B de la pompe 24. Selon le sens de fonctionnement de la pompe 24, ces conduites de pompe assurent respectivement l'alimentation en fluide des moteurs hydrauliques et l'échappement, ou inversement.

En effet, via une valve d'activation 34, ces conduites de pompe 28A, 28B peuvent être mises en communication respectivement avec deux conduites de moteur 30, 32. Chacune de ces conduites de moteur a une première partie 301, 321 apte à être reliée à une conduite de pompe, et une deuxième partie dans laquelle elles se divisent chacune en deux branches 302A, 302B, et 322A, 322B respectivement, reliées à des enceintes d'alimentation et d'échappement des moteurs 26A et 26B.

La pression dans celle des conduites de pompe 28A, 28B dont la pression est la plus faible est limitée par une valve d'échange 60 associée à un limiteur de pression 62 relié à un réservoir sans surpression (à la pression atmosphérique) 52, de manière à maintenir, dans la conduite de pompe à la plus basse pression, une pression égale à la pression de tarage du limiteur de pression 62, par exemple de l'ordre de 22 bar.

On notera que dans la transmission hydraulique 20, la valve d'échange 60 est optionnelle.

De manière connue en soi, les moteurs 26A, 26B sont en particulier des moteurs hydrauliques à pistons radiaux, similaires aux moteurs décrits par exemple dans le brevet français n°2 504 987.

Ces moteurs peuvent être engagés ou désengagés (embrayés ou débrayés), en particulier en faisant varier la pression régnant dans leurs carters, par exemple comme indiqué dans le brevet européen n° 0 993 982.

Cependant, d'autres types de moteurs hydrauliques, par exemple des moteurs à pistons axiaux, pourraient être prévus.

Chacun des moteurs 26A, 26B comporte un arbre de sortie, relié respectivement aux roues 14A, 14B. En mode moteur de la transmission hydraulique 20, sous l'effet de la différence de pression imposée par la pompe principale entre les conduites de pompe, et donc entre les conduites de moteur, les moteurs 26A et 26B délivrent un couple moteur qui leur permet d'entraîner les roues 14A, 14B.

Dans le cas où la différence de pression imposée par la pompe principale s'inverse entre les conduites de pompe, et donc entre les conduites de moteur (la pression à l'orifice de refoulement de la pompe 24A étant alors inférieure à la pression à son orifice d'alimentation 24B), la transmission hydraulique 20 est inversement en mode de freinage, et les moteurs 26A et 26B délivrent un couple de freinage qui tend à freiner les roues 14A, 14B.

La fonction générale de la valve d'activation 34 est d'activer ou de désactiver la transmission hydraulique 20 :

-   en mode désactivé, seule la transmission mécanique sert à l'entraînement du véhicule ; et
-   en mode activé, la transmission mécanique et la transmission hydraulique peuvent entraîner conjointement le véhicule. Cependant dans ce mode, la transmission hydraulique 20 peut par moments être inactive (ou débrayée) et les moteurs ne délivrer aucun couple, à savoir lorsque le dispositif est opéré dans un mode sans couple qui sera décrit dans la suite. Par ailleurs, on peut envisager un mode de fonctionnement, dans lequel la transmission hydraulique est activée seulement pendant le passage de vitesses, alors que la transmission mécanique est momentanément débrayée.

La valve 34 présente trois voies amont A, B, C, deux voies aval D et E, et deux positions I et II. Une position intermédiaire occupée de manière seulement transitoire est également représentée sur la figure 1.

La valve d'activation 34 comporte en outre deux chambres de commande hydraulique 34A, 34B.

Dans ce texte, les termes 'amont' et 'aval' appliqués aux voies d'une valve désignent en général le sens le plus fréquent de circulation du fluide ou de transmission d'une commande, sans que cela n'exclue d'autres modes de fonctionnement.

Les voies A et C sont reliées respectivement aux conduites de pompe 28A et 28B. La voie B est reliée au réservoir 52.

Les voies D et E sont reliées respectivement aux premières parties 301 et 321 des conduites de moteur 30 et 32, et ainsi sont reliées respectivement aux orifices d'alimentation et d'échappement des moteurs 26A et 26B.

Les chambres de commande 34A et 34B sont reliées respectivement aux voies C et D d'une valve de commande 40, en l'espèce une électrovalve, qui va être décrite plus loin.

La valve d'activation 34 comporte en outre un ressort de rappel qui tend à la maintenir dans la première position I.

Dans la première position I, les voies B, D et E sont reliées, et les voies A et C sont reliées. Dans la deuxième position II, les voies A et D sont reliées, les voies C et E sont reliées, et la voie B est isolée.

Comme le montre la case intermédiaire représentée sur la figure 1 pour la valve 34, en position intermédiaire entre les positions I et II, les quatre voies A, C, D et E sont reliées via des restrictions, la voie B étant au contraire isolée.

Ainsi, en première position I de la valve 34, les conduites de pompe 28A, 28B sont reliés l'une à l'autre (position de bipasse). De plus, les conduites de moteur 30 et 32 sont reliées l'une à l'autre, tout en étant reliées au réservoir 52. Les moteurs 26A et 26B sont donc inactifs. Ils peuvent alors être débrayés, c'est-à-dire mis en situation de roue libre, de différentes manières.

Par exemple, les pistons peuvent être rétractés dans leurs cylindres, comme décrit dans le brevet européen n° 0 993 982. On peut également envisager de désengager les rotors des moteurs par rapport à leurs organes de sortie. Par exemple, l'engagement entre les rotors et les organes de sortie s'opère par des crabots ou par friction, et le désengagement consiste à faire cesser la coopération des crabots ou à diminuer la friction.

En deuxième position II de la valve 34, les conduites de moteurs sont reliées aux conduites de pompe et alimentent les moteurs 26A, 26B pour qu'ils entraînent les roues 14A, 14B. Cette position correspond à l'état activé de la transmission hydraulique 20.

L'alimentation en fluide de cette transmission 20 se fait de la manière suivante.

Lorsque la pompe principale 24 est entraînée par le moteur d'entraînement 18, le fluide circule dans les conduites de pompes 28A et 28B, dans le sens de l'alimentation à partir de la pompe pour l'une et dans le sens du refoulement vers la pompe pour l'autre.

Les conduites de pompe 28A, 28B sont reliées à la conduite de gavage 41 via des clapets anti-retour 42A, 42B pour que la pression dans ces conduites reste au moins égale à la pression de gavage $P_G$, et via des limiteurs de pression 48A, 48B pour éviter toute surpression.

L'électrovalve de commande 40 permet de placer la transmission hydraulique 20 en mode activé ou en mode désactivé.

Cette électrovalve 40 présente deux voies amont A, B, deux voies aval C et D, deux positions I, II, et un ressort de rappel qui tend à la maintenir dans sa position I.

La voie A est reliée au réservoir 52. La voie B est reliée au conduit de gavage 41. Les voies C et D sont reliées aux chambres de commande 34A et 34B de la valve 34.

En position I de l'électrovalve 40, ses voies A et C sont reliées entre elles et ses voies B et D sont reliées entre elles, de sorte que la chambre de commande 34B est alimentée par la conduite de gavage 41, tandis que la chambre de commande 34A est reliée au réservoir. Il en résulte que la valve 34 est placée dans sa position I représentée sur la figure 1, dans laquelle les conduites de moteur 30 et 32 sont isolées des conduites de pompe, de sorte que la transmission hydraulique n'est pas active. En position II de l'électrovalve 40, ses voies A et D sont reliées entre elles et les voies B et C sont reliées entre elles, de sorte que c'est cette fois la chambre 34A qui est alimentée et la chambre 34B qui est reliée au réservoir, ce qui place la valve 34 dans sa position II, ce qui relie les conduites de moteur aux conduites de pompe et active donc la transmission hydraulique.

On a indiqué précédemment que la pompe 24 est à cylindrée variable. Pour faire varier cette cylindrée, la transmission hydraulique comprend deux électrovalves progressives de commande, 36A et 36 qui peuvent être déplacées entre deux positions extrêmes, dans lesquelles elles relient au réservoir l'une des chambres de commande 22A, 22B du plateau-came de la pompe 24 et relient l'autre de ces chambres à la conduite de gavage 41.

La transmission hydraulique 20 est commandée par une unité de commande électronique 50, qui est reliée aux différentes électrovalves et aux différents capteurs de cette transmission 20 par des circuits seulement partiellement représentés.

L'unité de commande est reliée à une interface utilisateur 54, qui permet au conducteur du véhicule d'activer ou de désactiver la transmission hydraulique 20. Cette interface peut permettre divers modes de fonctionnement :

- transmission hydraulique activée pour permettre une assistance hydraulique du moteur d'entraînement en situation de conduite « normale » du véhicule (bouton ON),
- transmission hydraulique totalement désactivée pour que le véhicule ne soit entraîné que par la transmission mécanique (bouton OFF),
- transmission hydraulique partiellement activée, c'est-à-dire ne s'activant que lorsqu'un besoin d'assistance est détecté, en particulier lorsqu'une situation de débrayage du moteur d'entraînement est détectée (Bouton APV).

Dans ce dernier cas, la transmission hydraulique est activée seulement pour fournir une aide au passage des vitesses, ainsi qu'il sera décrit. Via un curseur ou analogue, représenté en l'espèce sous le bouton APV, le conducteur peut, lorsqu'il sélectionne le mode d'activation partielle pour l'aide au passage des vitesses, choisir l'intensité de l'assistance, ainsi qu'il sera exposé dans la suite.

L'unité de commande 50 est reliée à l'électrovalve 40 par une ligne de commande L40, afin de commander cette électrovalve dans sa position I, dans laquelle la transmission hydraulique est inactive, ou dans sa position II, dans laquelle la transmission hydraulique est active.

Par des lignes de commande L36A et L36B, l'unité de commande 50 commande également les électrovalves 36A et 36B pour commander la cylindrée de la pompe principale 24.

Par ailleurs, l'unité de commande reçoit des informations sur l'état de conduite du véhicule. En particulier, elle est apte à détecter une situation de débrayage. Par exemple, l'information sur une situation de débrayage est détectée par un capteur de position 55A lié à la pédale d'embrayage du véhicule, et transmise à l'unité de commande 50. De même, des capteurs 55B et 55C peuvent être prévus, sur les pédales d'accélérateur et de frein. Par exemple, une situation de débrayage peut être considérée validée lorsque, simultanément, la pédale d'embrayage est enfoncée, et la pédale d'accélérateur est relâchée. La situation de débrayage peut également être détectée par un capteur (non représenté) relié à l'embrayage 18A.

Ce qui précède concerne le cas d'une boîte de vitesse à commande manuelle. Cependant, une situation de débrayage peut également être détectée avec une boîte de vitesse à commande automatique. Dans ce cas, des capteurs liés à cette boîte détectent la préparation d'un changement de rapport de vitesse et transmettent

L'unité de commande 50 contrôle l'activation et la désactivation de la transmission hydraulique 20 en commandant l'électrovalve 40 soit dans sa position II, ce qui place valve 34 dans sa position II et provoque l'activation de la transmission hydraulique, soit sans sa position I, qui place la valve 34 dans sa position I et provoque l'inactivation de la transmission hydraulique.

Lorsque la transmission hydraulique est activée, les moteurs 26A et 26B passent de leur configuration de roue libre à une configuration active, permettant ainsi à ces moteurs de délivrer un couple de sortie (mais, ainsi qu'on le verra, un mode de fonctionnement sans couple est également possible). Par exemple, la pression de fluide dans les conduites de moteur provoque la sortie des pistons de leurs cylindres, ou bien, éventuellement via une conduite d'activation non représentée, l'engagement des rotors des moteurs avec leurs organes de sortie.

Lorsque la transmission hydraulique est désactivée, les moteurs hydrauliques passent dans leurs configurations de roue libre par un processus inverse.

En situation de conduite normale, la vitesse de sortie du moteur d'entraînement 18 est déterminée par l'actionnement de la pédale d'accélération ou équivalent, en fonction du rapport de vitesse engagé. Cependant, l'unité de commande 50 peut commander la vitesse de sortie du moteur 18, par une ligne de commande L18, lorsqu'une situation d'embrayage est détectée, cette commande s'apparentant à un actionnement fictif de la pédale d'accélération. En outre, par tout moyen approprié, par exemple un capteur de vitesse 31 mesurant la vitesse de rotation de l'arbre 21, l'unité de commande 50 peut connaître la vitesse de sortie du moteur 18.

Ainsi, lorsqu'une situation de débrayage est détectée, la transmission étant active, l'unité de commande 50 calcule une vitesse de sortie de consigne pour le moteur 18 et détermine également, en particulier par calcul, la cylindrée de la pompe principale 24 entraînée par le moteur 18, pour que les moteurs hydrauliques 26A et 26B soient alimentés avec un débit de fluide permettant que leur vitesse de sortie et/ou leur couple de sortie soit réglé sur une valeur cible.

Cette valeur cible est choisie pour éviter les à-coups de motricité du véhicule lors du passage des vitesses, alors que l'entrainement du véhicule par la transmission mécanique cesse momentanément.

Par exemple, on réalise un contrôle par la vitesse, c'est-à-dire que l'on règle la vitesse du moteur 18 et la cylindrée de la pompe 24 pour obtenir une vitesse de sortie cible des moteurs hydrauliques.

Cette vitesse de sortie cible des moteurs hydrauliques peut être la vitesse qu'avaient les moteurs hydrauliques avant le début de la situation de débrayage.

Une façon simple de réaliser un contrôle par la vitesse est de maintenir, pendant le passage de vitesse, la vitesse de sortie du moteur entraînement à la vitesse qu'il avait au début de la situation de débrayage. Ainsi, sans changer la cylindrée de la pompe pendant le passage de vitesse de la transmission mécanique, on maintient en principe la vitesse de sortie des moteurs hydrauliques à celle qu'ils avaient au début de la situation de débrayage, pour une conduite sans à-coups.

Comme on le sait, la vitesse Nr de sortie d'un moteur hydraulique est déterminée par la relation :

$$Nr = Q/Ch$$

où Q est le débit de fluide traversant le moteur (correspondant essentiellement au débit de refoulement de la pompe qui alimente le moteur) et Ch est la cylindrée active du moteur.

Donc, pour n moteurs de même cylindrée active Ch, alimentés en parallèle par une pompe ayant un débit de refoulement Q également réparti entre les moteurs, la vitesse Nr des moteurs est déterminée par la relation :

$$Nr=Q/(Ch.n).$$

S'agissant d'une transmission hydraulique servant d'assistance à une transmission mécanique, il est fréquent que la cylindrée Ch des moteurs hydrauliques soit une cylindrée fixe.

Le débit Q de refoulement de la pompe est défini par la relation :

$$Q = Np.Cp$$

où Np est la vitesse d'entraînement de la pompe et Cp est la cylindrée active de la pompe. Si la pompe est en prise directe avec le moteur d'entraînement, sa vitesse d'entraînement Np est la vitesse du moteur d'entraînement. On considérera que la vitesse Np est égale à Ne.r, où Ne est la vitesse de sortie du moteur d'entraînement et r est le ratio d'entraînement de la pompe par le moteur d'entraînement, r étant égal à 1 si l'entrainement se fait en prise directe.

Donc, la vitesse Nr des moteurs hydrauliques est déterminée par la relation :

$$Nr = Ne.r.Cp/(Ch.n)$$

où Ne est la vitesse de sortie du moteur d'entraînement, r est le ratio d'entraînement de la pompe par le moteur d'entraînement, Cp est la cylindrée active de la pompe et Ch est la cylindrée totale active des moteurs hydrauliques.

Par ces calculs, la cylindrée Cp de la pompe permettant l'obtention d'une vitesse de sortie cible Nr des moteurs hydrauliques, peut être déterminée.

Cependant, on peut également maintenir cette vitesse cible par une régulation en boucle. Pour cela, on utilise des capteurs de vitesse 29 qui mesurent la vitesse de sortie des moteurs hydrauliques 26A et 26B ou la vitesse des roues auxquelles sont attelés ces moteurs. Dans ce cas, la vitesse détectée par ces capteurs 29 est transmise à l'unité de commande 50, et cette dernière commande la cylindrée de la pompe principale 24 pour que la vitesse détectée corresponde à la vitesse cible.

Par ailleurs, dans la mesure où, pendant le passage des vitesses de la transmission mécanique, la transmission hydraulique doit assurer seule la motricité du véhicule, elle doit délivrer un couple de sortie suffisant. Pour cette raison, il est avantageux de combiner le contrôle par la vitesse qui vient d'être exposé, avec un contrôle par le couple.

Le couple de sortie d'un moteur hydraulique est déterminé par la relation :

$$C = P.Ch$$

où P est la différence de pression entre l'alimentation et l'échappement du moteurs, et Ch est la cylindrée active du moteur. Donc, pour n moteurs alimentés en parallèle par une pompe, le couple Cn délivré par les n moteurs est :

$$Cn = P.Ch.n$$

où P est la différence de pression entre l'alimentation et l'échappement des moteurs hydrauliques et Ch est leur cylindrée totale active.

La différence de pression P entre l'alimentation et l'échappement des moteurs est elle-même fonction de la cylindrée Cp de la pompe et de différents paramètres de fonctionnement du circuit hydraulique, tels que les sections des différentes conduites, les pertes de charge et les fuites.

Le contrôle par le couple est réalisé en cherchant à maintenir aux bornes des moteurs hydrauliques c'est-à-dire entre l'orifice principal d'alimentation et l'orifice principal d'échappement de chaque moteur, une différence de pression correspondant au couple cible.

Comme indiqué ci-dessus, la vitesse de sortie des moteurs hydrauliques dépend directement du produit de la vitesse de sortie du moteur d'entraînement par la cylindrée de la pompe.

En conséquence, dans le mode de réalisation de l'invention dans lequel le paramètre cible est la vitesse de sortie des moteurs hydrauliques, on peut choisir de ne pas faire varier la cylindrée de la pompe, mais de contrôler la vitesse de sortie du moteur d'entraînement pour obtenir une vitesse cible pour les moteurs hydrauliques.

Comme indiqué ci-dessus, on peut pour cela maintenir, pendant le passage de vitesse, la vitesse de sortie du moteur entraînement à la vitesse qu'il avait au début de la situation de débrayage.

Cependant, lors du passage d'un premier rapport de vitesse à un deuxième rapport de vitesse dans une transmission mécanique, le régime du moteur d'entraînement change assez brusquement lorsque l'on embraye, après avoir passé le deuxième rapport. Bien entendu, ce changement est d'autant moins brusque que l'étagement de la boîte de vitesses est fin.

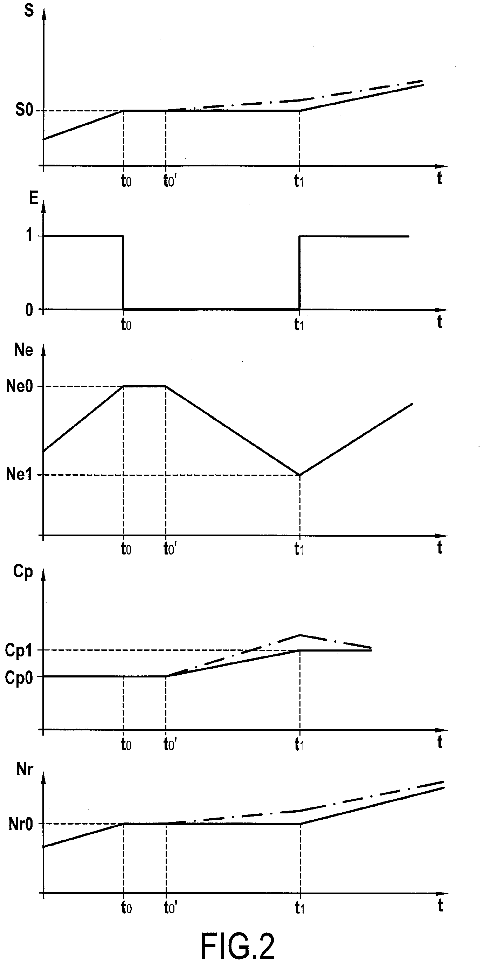

Pour éviter un changement brusque, on peut faire varier la vitesse de sortie du moteur d'entraînement pendant le débrayage visant à passer d'un premier rapport de vitesse à un deuxième rapport de vitesse. C'est ce que montre l'exemple de la figure 2.

Les courbes représentées sur la figure 2 comportent le temps en abscisse. Considérées successivement de haut en bas, les courbes représentent l'évolution de :

- la vitesse S du véhicule,
- l'état E de l'embrayage de la transmission mécanique (1 : état embrayé ; 0 : état débrayé),
- la vitesse de sortie Ne du moteur d'entraînement,
- la cylindrée Cp de la pompe,
- la vitesse de sortie Nr des moteurs hydrauliques.

Dans cet exemple, le véhicule est en phase d'accélération, sa vitesse de circulation S ayant tendance à augmenter. Le conducteur décide donc de passer au rapport de vitesse supérieure et, à l'instant t0, l'embrayage est débrayé, tandis qu'il est embrayé à nouveau à l'instant t1.

Comme on le voit sur la troisième courbe, la vitesse de sortie Ne du moteur d'entraînement a une vitesse de sortie Ne0 au moment du débrayage, et une vitesse de sortie inférieure Ne1 au moment où l'on embraye à nouveau. La transmission hydraulique étant activée, on contrôle la vitesse de sortie du moteur d'entraînement entre les instants t1 et t0 pour que la vitesse de sortie des moteurs hydrauliques corresponde à la vitesse souhaitée pour entraîner le véhicule sans à-coup. Par exemple, on souhaite que, pendant l'intégralité de la durée de la situation de débrayage, la vitesse de sortie Nr des moteurs hydrauliques reste égale à la valeur Nr0 de ces moteurs au moment du débrayage, comme indiqué en trait plein sur la courbe donnant Nr en fonction du temps t. Dans ce cas, au début du débrayage, on détermine la vitesse de sortie Ne du moteur d'entraînement en la fixant à la valeur Ne0.

A l'instant t0', on détermine quel sera le deuxième rapport de vitesse. On sait alors quelle devra être la vitesse Ne1 du moteur d'entraînement au moment de l'embrayage, pour que la vitesse S du véhicule ait à ce moment la valeur souhaitée, qui est par exemple la valeur S0 de cette vitesse au moment du débrayage. On fait alors progressivement passer la vitesse du moteur d'entraînement de la valeur Ne0 à la valeur Ne1. Ce faisant, pour maintenir la vitesse Nr des moteurs hydrauliques à la valeur souhaitée NrO, on augmente la cylindrée Cp de la pompe principale pour que le produit Ne.Cp soit sensiblement constant, en la faisant passer de la valeur Cp0 qu'elle avait aux instants t0 et t0', à la valeur Cp1 à l'instant t1.

Sur le graphe donnant S en fonction du temps t, on a représenté en trait plein l'évolution classique de la vitesse S du véhicule, qui augmente avant le débrayage, reste stable pendant la situation de débrayage et augmente à nouveau une fois que le deuxième rapport de vitesse est passé. Les évolutions correspondantes de la vitesse Nr des moteurs hydrauliques et de la cylindrée Cp de la pompe est donnée en trait plein sur les graphes donnant respectivement Nr et Cp en fonction du temps. Sur ces graphes, les courbes en traits interrompus mixtes montrent une autre possibilité, selon laquelle on utilise la transmission hydraulique pour continuer la dynamique d'évolution de la vitesse du véhicule pendant le passage de vitesse. En effet, ces courbes en traits interrompus montrent que l'on peut faire varier la cylindrée Cp de la pompe pour obtenir une variation de la vitesse Nr des moteurs hydrauliques permettant l'évolution souhaitée de la vitesse S du véhicule. Par exemple, Cp atteindra une valeur supérieure à la valeur Cp1 au temps t1, avant de revenir progressivement à cette valeur Cp1.

On notera que l'instant t0' peut être confondu avec l'instant t0. Par exemple, si l'on utilise une boîte de vitesses manuelle, il suffit que l'unité de commande 50 ait comme donnée d'entrée la valeur de la vitesse du véhicule pour, lors d'un débrayage, déterminer si le véhicule est en accélération ou en décélération et, ayant également comme donnée d'entrée le rapport de vitesse actif (« premier rapport de vitesse »), déterminer en conséquence le deuxième rapport de vitesse. De plus, lorsqu'une boîte de vitesse automatique est utilisée, l'information sur le deuxième rapport est directement disponible par le système de commande de cette boîte de vitesse.

Comme indiqué plus haut, on peut choisir de calculer la vitesse de sortie du moteur d'entraînement pendant une situation de débrayage en calculant une vitesse de sortie Ne dudit moteur selon la formule

$$Ne = (Ch/(f.Ccp)).Nr.n/r$$

où Ch est la cylindrée active de chaque moteur hydraulique

Ccp est la cylindrée courante de la pompe au moment où la situation d'embrayage est détectée,

f est un coefficient compris entre 0,5 et 1,5, de préférence entre 0,7 et 1,3, encore plus de préférence entre 0,8 et 1,2,

Nr est la vitesse de sortie cible des moteurs hydrauliques,

r est le ratio d'entraînement de la pompe par le moteur d'entraînement.

Selon une variante, on maintient la vitesse de sortie du moteur d'entraînement à la vitesse de sortie Ne calculée par l'équation précitée, on détecte la pression de fluide à l'alimentation et à l'échappement des moteurs hydrauliques et on maintient la cylindrée de la pompe à une valeur telle que le couple de sortie des moteurs hydrauliques reste sensiblement le même pendant la situation de débrayage qu'au moment où le débrayage commence.

C'est la marge de cylindrée de pompe restant entre f.Ccp et Cmp (Cmp étant la cylindrée maximale de la pompe) qui permet de faire varier la cylindrée de manière à obtenir le couple souhaité, en particulier en augmentant la cylindrée si le couple nécessaire au maintien de la motricité souhaitée pour le véhicule augmente lorsque la transmission hydraulique assure seule cette motricité, pendant la situation de débrayage.

Selon une variante, on maintient la vitesse de sortie du moteur d'entraînement à la vitesse de sortie Ne calculée, on détecte la pression de fluide à l'alimentation et à l'échappement des moteurs hydrauliques et on fait varier la cylindrée de la pompe pour que le couple de sortie des moteurs hydrauliques reste, pendant la situation de débrayage, sensiblement égal à une valeur non nulle prédéterminée.

Egalement en profitant de la marge de cylindrée de pompe précitée, on peut, par une variation de la valeur de la cylindrée, maintenir le couple de sortie des moteurs hydrauliques à la valeur souhaitée. Il faut ici relever que, lorsque les moteurs hydrauliques sont fortement sollicités à basse vitesse, les fuites de fluide augmentent. Il peut donc être utile d'augmenter la cylindrée de la pompe pour compenser ces fuites, tout en obtenant le couple de sortie souhaité.

Par ailleurs, alors qu'on a décrit ci-dessus un mode de réalisation dans lequel, lors d'un débrayage, on commande le dispositif de transmission par la vitesse de sortie cible des moteurs hydrauliques, éventuellement en y associant une commande par le couple de sortie cible, on peut également réaliser une commande par le couple de sortie uniquement. A cet égard, comme expliqué ci-dessous, on peut, lorsqu'une situation de débrayage est détectée, assigner une vitesse de sortie au moteur d'entraînement comme indiqué plus haut et commander la cylindrée de la pompe principale pour que, en étant entraînée par le moteur d'entraînement, elle maintienne une différence de pression cible entre les bornes des moteurs hydrauliques.

Par exemple, selon cette variante, on commande le dispositif de transmission selon un mode d'assistance hydraulique selon lequel on régule la cylindrée de la pompe de telle sorte que la pression d'alimentation d'au moins l'un des n moteurs hydrauliques est supérieure d'une valeur prédéterminée à la pression d'échappement dudit au moins un moteur.

A cet effet, le dispositif comporte des capteurs de pression aptes à détecter la pression aux bornes des moteurs hydrauliques. Ces capteurs peuvent être disposés respectivement sur les conduites de moteur 30 et 32. Dans l'exemple représenté, on utilise deux capteurs de pression 27, respectivement disposés sur la conduite de pompe 28A et sur la conduite de moteur 32 ce qui revient au même puisque, lorsque la valve 34 est dans sa position active II, la conduite de pompe 28A est reliée à la conduite de moteur 30. Les capteurs 27 sont reliés à l'unité de commande 50, à laquelle ils fournissent les pressions $P_A$ et $P_B$ régnant respectivement aux bornes des moteurs hydrauliques.

Dans ce cas, la transmission hydraulique assure la traction du véhicule, voire contribue à son accélération, ce qui est utile lors du passage d'un premier rapport de vitesse à un deuxième rapport de vitesse supérieur au premier, par exemple ainsi qu'il a été expliqué en référence à la figure 2. On réalise un contrôle en pression, c'est-à-dire qu'on fait varier la cylindrée de la pompe principale pour obtenir une différence de pression donnée aux bornes des moteurs. En d'autres termes, on recherche l'obtention d'un couple moteur donné. On peut chercher à asservir le contrôle de la cylindrée de la pompe principale 24 sur la vitesse du véhicule, en recherchant une vitesse cible, la variation de pression visant à préserver la vitesse malgré une augmentation du couple requis sur la transmission hydraulique. Cependant, la durée de la situation de débrayage est en général faible, de sorte qu'il peut s'avérer plus pratique de chercher à maintenir une différence de pression déterminée entre les conduites de moteur d'alimentation et d'échappement, en obtenant ainsi le couple dû à cette différence de pression, plutôt que de réaliser un tel asservissement. Par exemple, on peut calculer la différence de pression déterminée à partir d'une estimation du couple moteur effectif de la transmission mécanique, avant le débrayage. Ce couple moteur effectif peut être estimé à partir de paramètres de contrôle du fonctionnement de la transmission mécanique, tels que le régime du moteur d'entraînement avant le débrayage et la dose de carburant injectée. Connaissant la cylindrée active des moteurs hydrauliques, l'unité de commande électronique peut alors calculer la différence de pression nécessaire aux bornes des moteurs pour obtenir, par les moteurs hydrauliques, un couple moteur correspondant au couple effectif estimé de la transmission mécanique. La consigne de différence de pression déterminée par l'unité de commande est alors égale à la différence de pression calculée, ajoutée à la différence de pression préexistante aux bornes des moteurs hydrauliques. Juste avant le débrayage, le couple moteur total était la somme du couple moteur de la transmission mécanique et de celui de la transmission hydraulique. La différence de pression calculée donne un couple moteur qui compense la perte du couple de la transmission mécanique pendant le débrayage de cette dernière, et la différence de pression préexistante correspond quant à elle au maintien du couple délivré par les moteurs hydrauliques juste avant le débrayage.

Il faut ici relever qu'il peut arriver que la transmission hydraulique soit dimensionnée pour être une transmission d'appoint, qui ne peut délivrer qu'une partie du couple maximum de la transmission mécanique, par exemple de l'ordre de 20% à 40% de ce couple maximum. Dans ce cas, si, avant le débrayage, le couple moteur de la transmission mécanique était inatteignable par la transmission hydraulique, on peut décider que la valeur prédéterminée du couple de sortie des moteurs hydrauliques soit leur couple moteur maximal. En d'autres termes, on fait alors varier la cylindrée de la pompe pour maintenir, aux bornes des moteurs hydrauliques, la différence de pression maximum pour laquelle sont dimensionnés les composants de la transmission hydraulique.

Selon un autre exemple dans la même variante, on commande le dispositif de transmission selon un mode de retenue hydraulique selon lequel on régule la cylindrée de la pompe de telle sorte que la pression d'alimentation d'au moins l'un des n moteurs hydrauliques est inférieure d'une valeur prédéterminée à la pression d'échappement dudit au moins un moteur.

Dans ce cas, la transmission hydraulique contribue au contraire au freinage du véhicule, et c'est un couple de freinage que l'on recherche en maintenant, aux bornes des moteurs hydrauliques, une pression d'alimentation inférieure à la pression d'échappement. Les explications qui précèdent s'appliquent mutatis mutandis. Le fait de délivrer un couple de freinage pendant une situation de débrayage est en particulier utile lorsque, sur une déclive, le conducteur souhaite activer le frein moteur en passant d'un premier rapport de vitesse à un deuxième rapport de vitesse inférieur au premier.

On a indiqué précédemment que la transmission hydraulique peut être totalement désactivée, activée ou partiellement activée.

En général, la transmission hydraulique servant d'assistance à la transmission mécanique, elle est active en dessous d'un seuil limite d'application. Au-dessus de ce seuil, la transmission hydraulique peut passer automatiquement à l'état « désactivée » ou « partiellement activée », et l'interface utilisateur 54 peut en fonction de cela changer l'état des boutons ON, OFF et APV précités.

Lorsque la transmission hydraulique est à l'état partiellement activée, le procédé selon l'invention commence par les étapes de :

- détection d'un état de débrayage, et
- vérification que la situation permet l'activation de la transmission hydraulique. Cette situation est en particulier révélée par une vitesse de déplacement du véhicule inférieure ou égale à une vitesse plafond ou par le fait que le rapport de vitesse actuellement engagé est un rapport trop élevé pour permettre l'assistance hydraulique.

Ensuite, si la vérification est positive, la transmission hydraulique est activée et les étapes du procédé décrit précédemment sont mise en œuvre.

Il faut noter que, comme indiqué dans la demande de brevet français non pré-publiée déposée sous le n° FR 1 353 043, la situation dans laquelle la transmission hydraulique est partiellement activée peut correspondre à une mise en mode de fonctionnement « sans couple » de cette dernière. En effet, les situations de débrayage étant en général assez brèves, le temps à disposition peut ne pas être suffisant pour permettre un embrayage des moteurs hydrauliques s'ils étaient préalablement débrayés (par exemple un crabotage des pistons).

Pour rendre les moteurs 26A et 26B inactifs en mode « sans couple », on maintient la valve 34 en position II et, grâce à l'unité de commande 50, on régule la cylindrée de la pompe 24 en agissant sur les électrovalves 36A et 36B précitées de telle sorte que les pressions aux orifices d'alimentation 24A et d'échappement 24B de la pompe 24 soient sensiblement égales.

Pour permettre une telle régulation, on met à profit les deux capteurs de pression 27 précités, mesurant les pression $P_A$ et $P_B$ aux bornes des moteurs. Sur la base de ces valeurs de pression, l'unité de commande 50 fait varier et régule la valeur de la cylindrée de la pompe 24 de telle sorte que les pressions $P_A$ et $P_B$ deviennent égales. Cette régulation peut être faite par tout algorithme de contrôle adapté, en utilisant par exemple des PID ou autre.

Ainsi dans ce mode de régulation, le système utilise l'information de pression donnée par les capteurs de pression 27 pour déterminer la cylindrée de la pompe.

Par ailleurs, la plus basse de ces pressions (normalement $P_B$ lorsque le véhicule se déplace en marche avant) est astreinte à être égale à la pression d'échange $P_E$ par la valve d'échange 60.

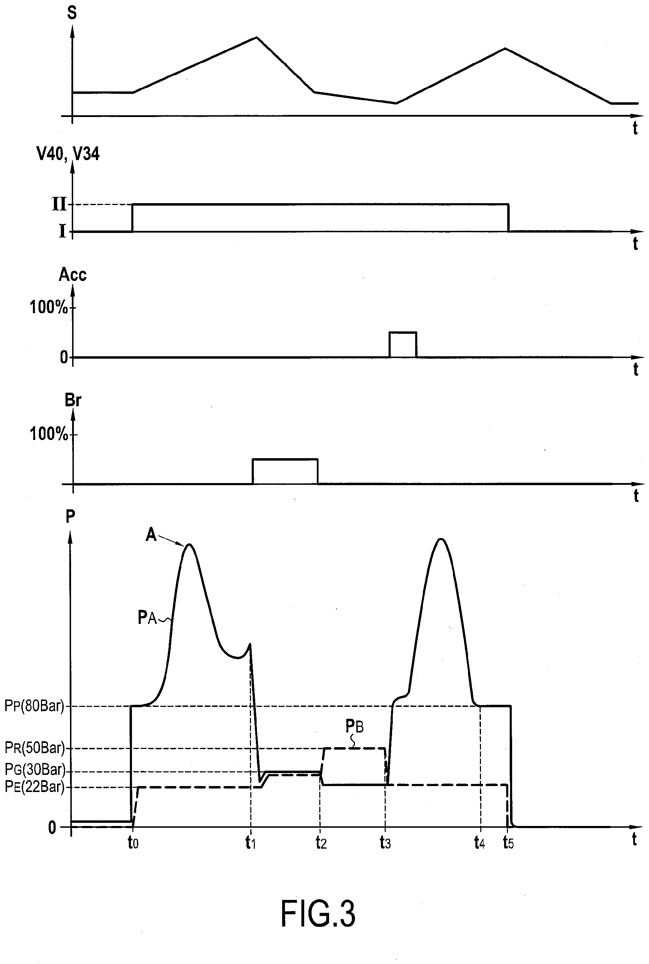

Le procédé de commande en mode sans couple va maintenant être décrit en relation avec la figure 3.

Cette figure présente un exemple de comportement du véhicule 10 et notamment de la transmission hydraulique 20, lorsqu'un ensemble de commandes lui sont successivement appliquées pendant un déplacement.

La figure comporte un axe des temps comme axe des abscisses. Différentes grandeurs sont portées en ordonnée, à savoir de haut en bas :

- La vitesse S du véhicule ;
- La position (respectivement V40 ou V34) des valves 40 et 34 ;
- La position Acc de la pédale d'accélérateur ;
- La position Br de la pédale de frein ;
- Les valeurs des pressions $P_A$ et $P_B$ régnant respectivement aux orifices d'alimentation et d'échappement des moteurs 26A et 26B.

(La pression mesurée par le capteur de pression 27 reliée à la conduite de pompe 28B n'est donc égale à la pression $P_B$ indiquée par la courbe de la figure 2 que lorsque la valve 34 est en position II).

Pendant une période initiale précédant un instant t0, le véhicule 10 évolue à vitesse moyenne, sans assistance hydraulique, par exemple sur une portion horizontale d'une route. La transmission hydraulique 20 est désactivée, et la valve 34 est en position I.

A l'instant t0, par exemple parce que le sol devient plus glissant et que le conducteur du véhicule 10 souhaite bénéficier de l'assistance hydraulique conférée par la transmission hydraulique 20, qui permet d'avoir quatre roues motrices, le conducteur active la transmission hydraulique 20.

Pour cela, il active le système d'assistance par tout moyen approprié, par exemple via un bouton de commande tel que bouton APV de l'interface 54 (bien entendu, on pourrait également prévoir un bouton supplémentaire, qui permette de mettre en œuvre le mode sans couple, sans permettre l'assistance au passage des vitesses, ou un autre type de commande, par exemple une commande vocale). L'unité de commande active alors la valve 40 (instant t0), qui passe en position II. Il s'ensuit que la valve 34 passe également de la position I à la position II et reste alors en position II.

L'unité de commande place alors la transmission hydraulique 20 en mode d'assistance, qui est le mode par défaut.

Dans ce mode de fonctionnement, l'unité 50 impose à la pompe 24 d'avoir la cylindrée Cy, mais cela à condition que la pression d'alimentation $P_A$ des moteurs 26A et 26B reste au moins égale à une pression-seuil minimale. Celle-ci est notée $P_P$, et est égale à 80 bars dans le véhicule 10. Si la pression d'alimentation $P_A$ tend à devenir inférieure à cette pression minimale $P_P$, l'unité 50 régule la cylindrée de la pompe de telle sorte que cette pression d'alimentation demeure égale à 80 bar.

Par conséquent, dès l'activation de la transmission hydraulique 20 à l'instant t0, la pression $P_A$ croît pour s'établir à une valeur cible minimale, par exemple 80 bar. La pression $P_B$ dans le même temps croît pour s'établir à la valeur de la pression d'échange $P_E$ (par exemple 22 bar).

Une fois la transmission hydraulique activée, la pression $P_A$ s'établit automatiquement à la valeur cible minimale, et la cylindrée de la pompe est régulée pour fournir le débit nécessaire aux moteurs hydrauliques afin de suivre la vitesse des roues de la transmission principale. Pour une même cylindrée de la pompe 24, la pression $P_A$ fluctue alors, en fonction du glissement des roues de la transmission principale.

A l'instant t1, le véhicule se trouve sur une pente et le conducteur du véhicule freine. Il appuie sur la pédale de frein 55. Cet appui est immédiatement détecté par l'unité de commande 50.

Celle-ci fait alors immédiatement passer la transmission hydraulique 20 en mode sans couple. Pour cela, tout en maintenant la valve 34 en position II, l'unité 50 commence à réguler la cylindrée de la pompe 24 de telle sorte que les pressions $P_A$ et $P_B$ aux orifices d'alimentation et d'échappement des moteurs 26A et 26B demeurent sensiblement égales.

La valve d'échange 60 passe donc en position médiane et se ferme.

Très rapidement, la pression $P_A$ dans la conduite 28A décroît, afin de devenir égale à la pression $P_B$.

La pression dans les deux conduites de pompe et de moteur, alimentées par la pompe de gavage 25, s'établit alors à la valeur de la pression de gavage $P_G$, soit 30 bar.

Simultanément, sous l'effet du freinage la vitesse du véhicule diminue. Pendant cette phase, comme le couple délivré par les moteurs 26A et 26B est nul, la transmission hydraulique 20 n'apporte aucune contribution d'aucune sorte au freinage.

Ensuite à un instant t2, alors que le véhicule est encore dans la pente, le conducteur du véhicule arrête de freiner. L'unité de commande perçoit l'arrêt de la pression sur la pédale de frein, et fait passer la transmission hydraulique 20 du mode sans couple au mode de retenue.

Pour cela, tout en maintenant la valve 34 en position activée II, l'unité de commande 50 régule la cylindrée de la pompe 24 de telle sorte que la pression $P_B$ dans la conduite de retour 28B soit au moins égale (éventuellement égale) à la pression de retenue $P_R$ (50 bar).

Parallèlement, la valve d'échange 60 redevient active et impose que la pression dans la conduite de pompe 28A atteigne la pression de la pression d'échange $P_E$ (22 bar).

L'écart de pression (50 bar - 22 bar) entre les orifices d'échappement et d'alimentation des moteurs fait que ceux-ci délivrent un léger couple de freinage. Sous l'effet de ce couple, la vitesse du véhicule continue à décroître, mais plus lentement que pendant la phase de freinage.

A l'instant t3, le conducteur ne souhaite plus décélérer mais souhaite au contraire réaccélérer progressivement. Il appuie donc sur la pédale d'accélérateur.

Dès que cette commande a été détectée, l'unité de commande 50 refait repasser le véhicule en mode d'assistance. La vitesse du véhicule croît à nouveau.

Dans un premier temps, plus précisément entre l'instant t3 et un instant ultérieur t4, la pression aux orifices d'alimentation des moteurs est supérieure à la pression-seuil de 80 bar. La cylindrée de la pompe est donc maintenue à la valeur Cy.

A partir de l'instant t4, la pression aux orifices d'alimentation des moteurs tend à devenir inférieure à la pression-seuil de 80 bar. L'unité de commande régule alors la cylindrée de la pompe 24 de manière à maintenir la pression $P_A$ à la valeur de 80 bar.

A l'instant t5, le conducteur souhaite désactiver la transmission hydraulique 20. Il place l'interrupteur 54 de commande d'activation de la transmission hydraulique 20 en position ouverte.

L'unité de commande 50 place la valve 40 en position I. La valve 34 par suite adopte également la position I. La transmission hydraulique 20 est alors désactivée, et les moteurs 26A et 26B sont en position de bipasse.

L'unité de commande 50 pourrait également être configurée pour, lorsque la pédale de frein est relâchée au cours d'une phase avec assistance hydraulique, replacer le véhicule 10 en mode d'assistance plutôt que de le placer en mode de retenue.

Dans l'exemple précédent, l'invention a été illustrée par un mode de réalisation avec deux moteurs 26A et 26B placés en parallèle. L'invention peut naturellement être mise en oeuvre avec tout nombre de moteurs, et quelle que soit leur configuration (en série, en parallèle, une combinaison de ces deux dispositions), dès lors que l'unité de commande détermine la vitesse de sortie du moteur d'entraînement 18 et pilote la cylindrée de la pompe principale 24 ainsi qu'il a été décrit.

Comme on l'a vu, le dispositif de la figure 1, qui utilise des capteurs de pression 27, permet de réaliser un contrôle par la pression.

Dans l'exemple représenté, ce dispositif comprend également des capteurs de vitesse 29 mesurant la vitesse de sortie des moteurs hydrauliques ou celle des roues qu'ils entraînent.

Selon le mode de commande que l'on souhaite mettre en œuvre, on peut faire coexister les capteurs 27 et 29, ou bien n'utiliser qu'une seule de ces catégories de capteurs. Par exemple, comme indiqué dans la demande de brevet français n° FR 1 353 043, on peut, alors que la transmission hydraulique est en activation partielle, faire en sorte que cette transmission ne produise pas de couple. Ceci est utile en dehors des situations d'embrayage ou dans toute situation dans laquelle l'assistance n'est pas requise.

Dans ce cas, l'unité de commande 50 peut calculer la cylindrée de la pompe pour que le couple de sortie des moteurs hydrauliques soit sensiblement nul, sur la base des informations de vitesse de rotation des roues ou des moteurs hydrauliques fournies par les capteurs 29, et des informations de vitesse de rotation du rotor de la pompe 24 fournies par le capteur 31. La cylindrée de la pompe est pour cela calculée de telle sorte que la vitesse de rotation des arbres de sortie des moteurs hydrauliques 26A, 26B, calculée à partir de la vitesse de rotation du rotor de la pompe 24 et des cylindrées respectives de la pompe et des moteurs, soit égale à la vitesse de rotation effective des arbres de sortie des moteurs 26A, 26B (c'est-à-dire la vitesse de rotation des roues 14A, 14B) telle que mesurée par les capteurs 29.

La vitesse de rotation de l'arbre de la pompe 24 conjointement avec la cylindrée de celle-ci détermine en effet le débit de fluide refoulé par la pompe 24 vers les moteurs 26A, 26B. De ce débit se déduit la vitesse de rotation des arbres de sortie des moteurs, compte tenu de la cylindrée de ceux-ci.

En choisissant une cylindrée de pompe qui rend la vitesse de rotation des arbres de sortie des moteurs 26A, 26B égale à la vitesse de rotation des roues 14A, 14B, l'unité de commande 50 pilote la pompe 24 de telle sorte que les pressions de fluide aux orifices d'alimentation et d'échappement des moteurs 26A, 26B demeurent sensiblement égales, et que les moteurs 26A et 26B ne délivrent aucun couple sur leur arbre de sortie.

Grâce aux mêmes capteurs, l'unité de commande 50 peut, pendant une situation de débrayage, réaliser un contrôle par la vitesse, ainsi qu'il a été exposé.

On a indiqué précédemment qu'il est possible, par exemple par un curseur ou analogue de l'interface utilisateur 54, de choisir l'intensité de l'assistance fournie par la transmission hydraulique lors d'un passage de vitesse. Ceci est en particulier envisageable lors d'une commande par le couple. En effet, selon l'intensité de l'assistance sélectionnée, le couple de sortie cible des moteurs hydrauliques peut être plus ou moins élevé.

Pour une assistance maximale, le couple cible peut être choisi pour totalement compenser la perte momentanée du couple délivré par la transmission mécanique ou, si cette compensation totale n'est pas possible, être fixé au couple de sortie maximal pour lequel les composants hydrauliques sont dimensionnés. En général, le couple cible peut être fixé à une fraction du couple de sortie maximal, la fraction étant déterminée entre 0 et 1 par le niveau d'assistance souhaité.

Le couple cible peut être le même pour tous les rapports de vitesse dans lesquels l'assistance hydraulique au passage de vitesse est active, ou être au contraire différent selon les rapports engagés. Il peut être fixe pendant la situation d'embrayage ou évoluer.

Bien entendu, la liaison entre l'unité de commande 50 et les différents organes qu'elle commande en leur transmettant une information ou dont elle reçoit une information, peut être réalisée par tout moyen approprié pour transporter de l'information, filaire ou autre.

## Revendications

1. Procédé de commande d'un dispositif de transmission d'un véhicule, le dispositif comprenant un moteur d'entraînement (18), une transmission mécanique (16) reliée au moteur d'entraînement via un embrayage (18A) et une transmission hydraulique (20) ayant une pompe (24) et n moteurs hydrauliques (26A, 26B), n étant supérieur ou égal à 1, la pompe étant apte à être entraînée par le moteur d'entraînement (18) pour alimenter les moteurs hydrauliques en fluide,

   **caractérisé en ce qu'**on détecte une situation de débrayage du moteur d'entraînement (18), on calcule une vitesse de sortie (Ne) du moteur d'entraînement à l'état débrayé, et on détermine la cylindrée (Cp) de la pompe (24) pour que, en étant entraînée par le moteur d'entraînement ayant la vitesse de sortie déterminée, la pompe délivre aux n moteurs hydrauliques (26A, 26B) un débit de fluide tel qu'au moins l'un des paramètres de fonctionnement des moteurs hydrauliques parmi la vitesse de sortie (Nr) et le couple de sortie desdits moteurs soit un paramètre cible.

2. Procédé selon la revendication 1, **caractérisé en ce que** la vitesse de sortie déterminée (Ne) du moteur d'entraînement (18) est la vitesse de sortie de ce moteur au début de la situation de débrayage.

3. Procédé selon la revendication 1, **caractérisé en ce que**, le débrayage du moteur d'entraînement (18) visant à faire passer ce moteur d'un premier rapport à un deuxième rapport, on commande le dispositif selon un mode d'assistance au passage de vitesse selon lequel on détecte ledit deuxième rapport et on détermine une première valeur de vitesse de sortie (Ne0) du moteur d'entraînement qui est la vitesse de sortie de ce moteur au moment où, ce moteur étant dans le premier rapport, la situation de débrayage commence et une deuxième valeur de vitesse de sortie (Ne1) du moteur d'entraînement qui est la vitesse de sortie nécessaire au maintien de la vitesse du véhicule entraîné par la transmission mécanique au moment où, le deuxième rapport étant enclenché, la situation de débrayage cesse, et on calcule la vitesse de sortie (Ne) du moteur d'entraînement de telle sorte qu'elle passe de la première valeur, au début (t0) de la situation de débrayage, à la deuxième valeur, à la fin (t1) de la situation de débrayage.

4. Procédé selon la revendication 3, **caractérisé en ce que**, selon le mode d'assistance au passage de vitesse, on détecte le deuxième rapport pendant la situation de débrayage et on maintient la vitesse de sortie (Ne) du moteur d'entraînement à la première valeur (Ne0) entre le début (t0) de la situation de débrayage et le moment (t0') de la détection du deuxième rapport, puis on fait varier ladite vitesse de sortie afin qu'elle atteigne la deuxième valeur (Ne1) au moment (t1) où la situation de débrayage cesse.

5. Procédé selon la revendication 1, dans lequel on calcule la vitesse de sortie du moteur d'entraînement (18) en calculant une vitesse de sortie Ne dudit moteur selon la formule

$$Ne = (Ch/(f.Ccp)).Nr.n/r,$$

où

   Ch est la cylindrée active de chaque moteur hydraulique

   Ccp est la cylindrée courante de la pompe au moment où la situation de débrayage est détectée,

   f est un coefficient compris entre 0,5 et 1,5, de préférence entre 0,7 et 1,3, encore plus de préférence entre 0,8 et 1,2.

Nr est la vitesse de sortie cible des moteurs hydrauliques,

r est le ratio d'entraînement de la pompe par le moteur d'entraînement.

**6.** Procédé selon la revendication 5, **caractérisé en ce qu'**on maintient la vitesse de sortie du moteur d'entraînement (18) à la vitesse de sortie Ne calculée, on détecte la pression de fluide à l'alimentation et à l'échappement des moteurs hydrauliques (26A, 26B) et on maintient la cylindrée de la pompe (24) à une valeur telle que le couple de sortie des moteurs hydrauliques reste sensiblement le même pendant la situation de débrayage qu'au moment où le débrayage commence.

**7.** Procédé selon la revendication 5, **caractérisé en ce qu'**on maintient la vitesse de sortie du moteur d'entraînement (18) à la vitesse de sortie Ne calculée, on détecte la pression de fluide à l'alimentation et à l'échappement des moteurs hydrauliques et on fait varier la cylindrée de la pompe (24) pour que le couple de sortie des moteurs hydrauliques reste, pendant la situation de débrayage, sensiblement égal à une valeur non nulle prédéterminée.

**8.** Procédé selon la revendication 7, **caractérisé en ce qu'**on commande le dispositif de transmission selon un mode d'assistance hydraulique selon lequel on régule la cylindrée de la pompe (24) de telle sorte que la pression d'alimentation d'au moins l'un des n moteurs hydrauliques est supérieure d'une valeur prédéterminée à la pression d'échappement dudit au moins un moteur.

**9.** Procédé selon la revendication 7, **caractérisé en ce qu'**on commande le dispositif de transmission selon un mode de retenue hydraulique selon lequel on régule la cylindrée de la pompe (24) de telle sorte que la pression d'alimentation d'au moins l'un des n moteurs hydrauliques (26A, 26B) est inférieure d'une valeur prédéterminée à la pression d'échappement dudit au moins un moteur.

**10.** Véhicule comprenant un dispositif de transmission comprenant un moteur d'entraînement (18), une transmission mécanique (16) reliée au moteur d'entraînement via un embrayage (18A) et une transmission hydraulique (20) ayant une pompe (24) et n moteurs hydrauliques (26A, 26B), n étant supérieur ou égal à 1, la pompe étant apte à être entraînée par le moteur d'entraînement (18) pour alimenter les moteurs hydrauliques en fluide, **caractérisé en ce que** le dispositif de transmission est configuré pour être commandé de sorte qu'on détecte une situation de débrayage du moteur d'entraînement (18), on calcule une vitesse de sortie (Ne) du moteur d'entraînement à l'état débrayé, et on détermine la cylindrée (Cp) de la pompe (24) pour que, en étant entraînée par le moteur d'entraînement ayant la vitesse de sortie déterminée, la pompe délivre aux n moteurs hydrauliques (26A, 26B) un débit de fluide tel qu'au moins l'un des paramètres de fonctionnement des moteurs hydrauliques parmi la vitesse de sortie (Nr) et le couple de sortie desdits moteurs soit un paramètre cible.

**Patentansprüche**

**1.** Verfahren zur Steuerung einer Getriebevorrichtung eines Fahrzeugs, wobei die Vorrichtung einen Antriebsmotor (18), ein mechanisches Getriebe (16), das mit dem Antriebsmotor über eine Kupplung (18A) verbunden ist, und ein hydraulisches Getriebe (20), das eine Pumpe (24) und n Hydraulikmotoren (26A, 26B) aufweist, wobei n größer als oder gleich 1 ist, umfasst, wobei die Pumpe dazu geeignet ist, von dem Antriebsmotor (18) angetrieben zu werden, um die Hydraulikmotoren mit Fluid zu versorgen, **dadurch gekennzeichnet, dass** eine Auskupplungssituation des Antriebsmotors (18) erfasst wird, eine Ausgangsdrehzahl (Ne) des Antriebsmotors in dem ausgekuppelten Zustand berechnet wird, und die Verdrängung (Cp) der Pumpe (24) bestimmt wird, damit die Pumpe, indem sie von dem Antriebsmotor angetrieben wird, der die bestimmte Ausgangsdrehzahl aufweist, an die n Hydraulikmotoren (26A, 26B) einen solchen Fluiddurchsatz liefert, dass zumindest einer der Funktionsparameter der Hydraulikmotoren aus der Ausgangsdrehzahl (Nr) und dem Ausgangsdrehmoment der Motoren einem Sollparameter entspricht.

**2.** Verfahren nach Anspruch 1, **dadurch gekennzeichnet, dass** die bestimmte Ausgangsdrehzahl (Ne) des Antriebsmotors (18) die Ausgangsdrehzahl dieses Motors am Beginn der Auskupplungssituation ist.

**3.** Verfahren nach Anspruch 1, **dadurch gekennzeichnet, dass**, wenn das Auskuppeln des Antriebsmotors (18) erfolgt, um diesen Motor aus einem ersten Gang in einen zweiten Gang zu schalten, die Vorrichtung gemäß einem Modus zur Unterstützung des Übergangs der Drehzahl gesteuert wird, gemäß welchem der zweite Gang erfasst wird, und ein erster Wert der Ausgangsdrehzahl (Ne0) des Antriebsmotors, welcher die Ausgangsdrehzahl dieses Motors in dem Moment ist, in dem die Auskupplungssituation beginnt, wobei dieser Motor in dem ersten Gang ist, und ein zweiter Wert der Ausgangsdrehzahl (Ne1) des Antriebsmotors bestimmt werden, welcher die zur Beibehaltung der Geschwindigkeit des von dem mechanischen Getriebe angetriebenen Fahrzeugs notwendige Ausgangsdrehzahl in dem Moment ist, in dem durch Einlegen des zweiten Gangs die Auskupplungssituation endet, und die Ausgangsdrehzahl (Ne) des Antriebsmotors auf solche Weise berechnet wird, dass sie von dem ersten Wert, an dem Beginn (t0) der Auskupplungssituation, auf den zweiten Wert, an dem Ende (t1) der Auskupplungssituation übergeht.

4. Verfahren nach Anspruch 3, **dadurch gekennzeichnet, dass** gemäß dem Modus zur Unterstützung des Übergangs der Drehzahl der zweite Gang während der Auskupplungssituation erfasst wird und die Ausgangsdrehzahl (Ne) des Antriebsmotors zwischen dem Beginn (t0) der Auskupplungssituation und dem Moment (t0') der Erfassung des zweiten Gangs auf dem ersten Wert (Ne0) gehalten wird, und anschließend die Ausgangsdrehzahl variiert wird, bis sie in dem Moment (t1), in dem die Auskupplungssituation endet, den zweiten Wert (Ne1) erreicht.

5. Verfahren nach Anspruch 1, wobei die Ausgangsdrehzahl des Antriebsmotors (18) berechnet wird, indem eine Ausgangsdrehzahl Ne des Motors gemäß der Formel

$$Ne = (Ch/(f.Ccp)).Nr.n/r$$

berechnet wird, wobei

Ch die aktive Verdrängung eines jeden Hydraulikmotors ist,
Ccp die aktuelle Verdrängung der Pumpe in dem Moment ist, in dem die Auskupplungssituation erfasst wird,
f ein Koeffizient zwischen 0,5 und 1,5, vorzugsweise zwischen 0,7 und 1,3, noch bevorzugter zwischen 0,8 und 1,2 ist,
Nr die Soll-Ausgangsdrehzahl der Hydraulikmotoren ist,
r das Antriebsverhältnis der Pumpe durch den Antriebsmotor ist.

6. Verfahren nach Anspruch 5, **dadurch gekennzeichnet, dass** die Ausgangsdrehzahl des Antriebsmotors (18) auf der berechneten Ausgangsdrehzahl Ne gehalten wird, der Druck des Fluids an dem Zulauf und an dem Ablauf der Hydraulikmotoren (26A, 26B) erfasst wird und die Verdrängung der Pumpe (24) auf einem solchen Wert gehalten wird, dass das Ausgangsdrehmoment der Hydraulikmotoren während der Auskupplungssituation im Wesentlichen gleich bleibt wie in dem Moment, in dem die Auskupplung beginnt.

7. Verfahren nach Anspruch 5, **dadurch gekennzeichnet, dass** die Ausgangsdrehzahl des Antriebsmotors (18) auf der berechneten Ausgangsdrehzahl Ne gehalten wird, der Druck des Fluids an dem Zulauf und an dem Ablauf der Hydraulikmotoren erfasst wird und die Verdrängung der Pumpe (24) variiert wird, damit das Ausgangsdrehmoment der Hydraulikmotoren während der Auskupplungssituation im Wesentlichen gleich einem vorbestimmten Wert ungleich null bleibt.

8. Verfahren nach Anspruch 7, **dadurch gekennzeichnet, dass** die Getriebevorrichtung gemäß einem hydraulischen Unterstützungsmodus gesteuert wird, gemäß welchem die Verdrängung der Pumpe (24) auf solche Weise geregelt wird, dass der Zulaufdruck von zumindest einem der n Hydraulikmotoren höher als ein vorbestimmter Wert an dem Ablaufdruck des zumindest einen Motors ist.

9. Verfahren nach Anspruch 7, **dadurch gekennzeichnet, dass** die Getriebevorrichtung gemäß einem hydraulischen Haltemodus gesteuert wird, gemäß welchem die Verdrängung der Pumpe (24) auf solche Weise geregelt wird, dass der Zulaufdruck von zumindest einem der n Hydraulikmotoren (26A, 26B) niedriger als ein vorbestimmter Wert an dem Ablaufdruck des zumindest einen Motors ist.

10. Fahrzeug, das eine Getriebevorrichtung umfasst, die einen Antriebsmotor (18), ein mechanisches Getriebe (16), das mit dem Antriebsmotor über eine Kupplung (18A) verbunden ist, und ein hydraulisches Getriebe (20), das eine Pumpe (24) und n Hydraulikmotoren (26A, 26B) aufweist, wobei n größer als oder gleich 1 ist, umfasst, wobei die Pumpe dazu geeignet ist, von dem Antriebsmotor (18) angetrieben zu werden, um die Hydraulikmotoren mit Fluid zu versorgen,
**dadurch gekennzeichnet, dass** die Getriebevorrichtung dazu ausgestaltet ist, so gesteuert zu werden, dass eine Auskupplungssituation des Antriebsmotors (18) erfasst wird, eine Ausgangsdrehzahl (Ne) des Antriebsmotors in dem ausgekuppelten Zustand berechnet wird, und die Verdrängung (Cp) der Pumpe (24) bestimmt wird, damit die Pumpe, indem sie von dem Antriebsmotor angetrieben wird, der die bestimmte Ausgangsdrehzahl aufweist, an die n Hydraulikmotoren (26A, 26B) einen solchen Fluiddurchsatz liefert, dass zumindest einer der Funktionsparameter der Hydraulikmotoren aus der Ausgangsdrehzahl (Nr) und dem Ausgangsdrehmoment der Motoren einem Sollparameter entspricht.

**Claims**

1. A method for controlling a vehicle transmission device, the device comprising a drive motor (18), a mechanical transmission (16) connected to the drive motor via a clutch (18A) and a hydraulic transmission (20) having a pump (24) and n hydraulic motors (26A, 26B), n being greater than or equal to 1, the pump being able to be driven by the drive motor (18) to supply the hydraulic motors with fluid, **characterized in that** a declutched situation of the drive motor (18) is detected, an output speed (Ne) of the drive motor in the declutched state is calculated, and the displacement (Cp) of the pump (24) is determined so that the pump, being driven by the drive motor having the determined output speed, delivers to the n hydraulic motors (26A, 26B) a fluid flow rate such that at least one of the operating parameters of the hydraulic motors among the output speed (Nr) and the output torque of said motors is one target parameter.

2. The method according to claim 1, **characterized in that** the determined output speed (Ne) of the drive motor (18) is the output speed of this motor at the beginning of the declutched situation.

3. The method according to claim 1, **characterized in that**, the declutching of the drive motor (18) being aimed to switch this motor from a first gear to a second gear, the device is controlled according to a gear shift assistance mode according to which said second gear is detected and a first output speed value (Ne0) of the drive motor is determined, which is the output speed of this motor at the time when, this motor being in the first gear, the declutched situation begins and a second output speed value (Ne1) of the drive motor is determined, which is the output speed necessary to maintain the speed of the vehicle driven by the mechanical transmission at the time when, the second gear being engaged, the declutched situation ceases, and the output speed (Ne) of the drive motor is calculated so that it switches from the first value, at the beginning (t0) of the declutched situation, to the second value, at the end (t1) of the declutched situation.

4. The method according to claim 3, **characterized in that**, according to the shift gear assistance mode, the second gear during the declutched situation is detected and the output speed (Ne) of the drive motor is maintained to the first value (Ne0) between the beginning (t0) of the declutched situation and the time (t0') of the detection of the second gear, then said output speed is varied such that it reaches the second value (Ne1) at the time (t1) when the declutched situation ceases.

5. The method according to claim 1, wherein the output speed of the drive motor (18) is calculated by calculating an output speed Ne of said motor according to the formula

$$Ne = (Ch/(f.Ccp)).Nr.n/r,$$

where

Ch is the active displacement of each hydraulic motor
Ccp is the current displacement of the pump at the time when the declutched situation is detected,
f is a coefficient comprised between 0.5 and 1.5, preferably between 0.7 and 1.3, even more preferably between 0.8 and 1.2.
Nr is the target output speed of the hydraulic motors,
r is the drive ratio of the pump by the drive motor.

6. The method according to claim 5, **characterized in that** the output speed of the drive motor (18) is maintained to the calculated output speed Ne, the fluid pressure at the supply and at the exhaust of the hydraulic motors (26A, 26B) is detected and the displacement of the pump (24) is maintained to a value such that the output torque of the hydraulic motors remains substantially the same during the declutched situation as when the declutching begins.

7. The method according to claim 5, **characterized in that** the output speed of the drive motor (18) is maintained to the calculated output speed Ne, the fluid pressure at the supply and at the exhaust of the hydraulic motors is detected and the displacement of the pump (24) is varied so that the output torque of the hydraulic motors remains, during the declutched situation, substantially equal to a predetermined non-zero value.

8. The method according to claim 7, **characterized in that** the transmission device is controlled according to a hydraulic assistance mode according to which the displacement of the pump (24) is regulated so that the supply pressure of at least one of the n hydraulic motors is higher, by a predetermined value, than the exhaust pressure of said at least one motor.

9. The method according to claim 7, **characterized in that** the transmission device is controlled according to a hydraulic retention mode according to which the displacement of the pump (24) is regulated such that the supply pressure of at least one of the n hydraulic motors (26A, 26B) is lower, by a predetermined value, than the exhaust pressure of said at least one motor.

10. A vehicle comprising a transmission device comprising a drive motor (18), a mechanical transmission (16) connected to the drive motor via a clutch (18A) and a hydraulic transmission (20) having a pump (24) and n hydraulic motors (26A, 26B), n being greater than or equal to 1, the pump being able to be driven by the drive motor (18) to supply the hydraulic motors with fluid,

**characterized in that**

the transmission device is configured to be controlled so that a declutched situation of the drive motor (18) is detected, an output speed (Ne) of the drive motor in the declutched state is calculated, and the displacement (Cp) of the pump (24) is determined so that the pump, being driven by the drive motor having the determined output speed, delivers to the n hydraulic motors (26A, 26B) a fluid flow rate such that at least one of the operating parameters of the hydraulic motors among the output speed (Nr) and the output torque of said motors is a target parameter.

FIG.1

EP 3 201 030 B1

FIG.2

FIG.3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0993982 A
- WO 2013041115 A
- FR 2504987
- FR 1353043